# EUROPEAN PATENT SPECIFICATION

(11) **EP 4 181 698 B1**
(45) Date of publication and mention of the grant of the patent: **24.12.2025**
(21) Application number: 21742142.9
(22) Date of filing: 15.07.2021
(51) Int. Cl.: A24D 3/04, A24D 3/06

(54) **PAPER CAVITY FILTER**
PAPIERHOHLRAUMFILTER
FILTRE À CAVITÉ EN PAPIER

(30) Priority: 17.07.2020 GB 202011041; 12.03.2021 GB 202103442
(43) Date of publication of application: 24.05.2023
(73) Proprietor: Filtrona Pte. Ltd., Singapore 068877 (SG)
(72) Inventor: MEREDITH, Patrick, Singapore 068877 (SG); RAHMAN, Arief, Sidoarjo, 61256 (ID); CLARKE, Paul, Tyne and Wear NE32 3UP (GB)
(74) Representative: Reddie & Grose LLP
(86) International application number: PCT/EP2021/069790
(87) International publication number: WO 2022/013370

(56) References cited:
- EP-A1- 2 712 510
- WO-A1-2013/187676
- WO-A1-2017/148773
- US-A1- 2014 224 268
- US-B2- 10 123 561

## Description

### INTRODUCTION

The present invention relates to tobacco smoke filters or filter elements for smoking articles such as cigarettes.

### BACKGROUND

Tobacco smoke filters can be manufactured from a number of different materials. Presently, 98% of commercial cigarette filters comprise an amount of cellulose acetate (source: Euromonitor International). However, cellulose acetate is not readily biodegradable and, as a result, cigarette filters (and cigarette butts) comprising cellulose acetate may persist in the environment for many years. Due to this, and in consideration of new EU legislation coming into force by 2021 (aimed at reducing the use of single-use plastics such as cellulose acetate filters), there is increasing interest in tobacco smoke filters that do not comprise single-use plastics and are readily biodegradable.

An alternative filtration material to cellulose acetate is paper. Tobacco smoke filters comprising paper as the filtering material are well known in the art. Paper filters offer a number of advantages over cellulose acetate in terms of enhanced biodegradability and higher filtration efficiencies at a given pressure drop. However they also have a number of disadvantages compared to cellulose acetate, for example they may have a deleterious effect on the taste of the cigarette, reduced filter firmness and an unattractive pre and post-smoking appearance (as a result of staining). Further, paper filters typically have a reduced retention of toxic phenolic compounds and a much higher retention of tar and nicotine than those made from cellulose acetate. Thus the experience of smoking cigarettes with conventional paper filters is not comparable to that from a conventional cellulose acetate filtered cigarette.

A tobacco smoke filter which has the advantages of a paper filter (biodegradability etc.) without the deleterious "paper taste" effect and with phenolic retention similar to that of a cellulose acetate filter is described in WO2010/136751. However, attempts to match the filtration efficiency (specifically the tar and nicotine retention) of paper filters to that of cellulose acetate filters by decreasing the pressure drop have resulted in processing difficulties because of the impact on filter firmness. Thus the high tar and nicotine retention of paper filters compared to cellulose acetate filters remains a disadvantage; preventing paper filters from gaining widespread commercial use.

It is therefore desirable to provide a tobacco smoke filter for a smoking article (e.g. a cigarette) which has the advantages of a paper filter (biodegradability etc.) with the firmness and tar and nicotine retention at least similar to that of a cellulose acetate filter thus providing a smoking experience which is comparable to that from a conventional cellulose acetate filtered cigarette. Other filters are known from WO 2013/187676 A1, US 2014/224268 A1, US 10 123 561 B2 and EP 2 712 510 A1.

### SUMMARY OF THE INVENTION

According to the present invention in a first aspect there is provided a tobacco smoke filter or filter element according to claim 1. According to the present invention in an aspect there is provided a tobacco smoke filter or filter element comprising: a longitudinally extending (e.g. cylindrical) core which includes a (e.g. wrapped) paper or other non-cellulose acetate containing filtering material and a (e.g. further) wrapper engaged around the longitudinally extending (e.g. cylindrical) core wherein the filter or filter element is readily biodegradable and wherein;
(a) the longitudinally extending (e.g. cylindrical) core includes two plugs of (e.g. wrapped) paper or other non-cellulose acetate containing filtering material distanced longitudinally from each other and the (e.g. further) wrapper engaged around the plugs of (e.g. wrapped) paper or other non-cellulose acetate containing filtering material defines a cavity between the plugs of (e.g. wrapped) paper or other non-cellulose acetate containing filtering material; and/or
(b) at least one end of the (e.g. further) wrapper extends beyond the end of the longitudinally extending core (e.g. cylindrical) around which is engaged to define a (e.g. tubular) cavity or recess at the end of the filter.

According to the present invention in an aspect there is provided a tobacco smoke filter or filter element comprising: a longitudinally extending (e.g. cylindrical) core which includes two plugs of (e.g. wrapped) paper or other non-cellulose acetate containing filtering material distanced longitudinally from each other and a (e.g. further) wrapper engaged around the plugs of (e.g. wrapped) paper or other non-cellulose acetate containing filtering material, such that the (e.g. further) wrapper defines a cavity between the plugs of (e.g. wrapped) paper filtering material or other non-cellulose acetate containing filtering material and wherein the filter or filter element is readily biodegradable.

According to the present invention in an aspect there is provided a tobacco smoke filter or filter element comprising: a longitudinally extending (e.g. cylindrical) core which includes two plugs of wrapped paper or other non-cellulose acetate containing filtering material distanced longitudinally from each other and a further wrapper engaged around the plugs of wrapped paper or other non-cellulose acetate containing filtering material, such that the further wrapper defines a cavity between the wrapped plugs of paper filtering material or other non-cellulose acetate containing filtering material and wherein the filter or filter element is readily biodegradable.

According to the present invention in an aspect there is provided a tobacco smoke filter or filter element comprising: a longitudinally extending (e.g. cylindrical) core which includes a (e.g. wrapped) paper or other non-cellulose acetate containing filtering material and a (e.g. further) wrapper engaged around the longitudinally extending (e.g. cylindrical) core wherein at least one end of the (e.g. further) wrapper extends beyond the end of the longitudinally extending (e.g. cylindrical) core around which is engaged to define a (e.g. tubular) cavity or recess at the end of the filter and wherein the filter or filter element is readily biodegradable.

According to the present invention in an aspect there is provided a tobacco smoke filter or filter element comprising: a longitudinally extending (e.g. cylindrical) core which includes a wrapped paper or other non-cellulose acetate containing filtering material and a further wrapper engaged around the longitudinally extending (e.g. cylindrical) core wherein at least one end of the further wrapper extends beyond the end of the longitudinally extending (e.g. cylindrical) core around which is engaged to define a (e.g. tubular) cavity or recess at the end of the filter and wherein the filter or filter element is readily biodegradable.

According to the present invention in an aspect there is provided a tobacco smoke filter or filter element comprising: a longitudinally extending (e.g. cylindrical) core which includes two plugs of (e.g. wrapped) paper or other non-cellulose acetate containing filtering material distanced longitudinally from each other and a (e.g. further) wrapper engaged around the longitudinally extending (e.g. cylindrical) core, wherein the (e.g. further) wrapper defines a cavity between the plugs of (e.g. wrapped) paper or other non-cellulose acetate containing filtering material and at least one end of the (e.g. further) wrapper extends beyond the end of the longitudinally extending (e.g. cylindrical) core around which is engaged to define a (e.g. tubular) cavity or recess at the end of the filter and wherein the filter or filter element is readily biodegradable.

According to the present invention in an aspect there is provided a tobacco smoke filter or filter element comprising: a longitudinally extending (e.g. cylindrical) core which includes two plugs of wrapped paper or other non-cellulose acetate containing filtering material distanced longitudinally from each other and a further wrapper engaged around the longitudinally extending (e.g. cylindrical) core, wherein the further wrapper defines a cavity between the plugs of wrapped paper or other non-cellulose acetate containing filtering material and at least one end of the further wrapper extends beyond the end of the longitudinally extending (e.g. cylindrical) core around which is engaged to define a (e.g. tubular) cavity or recess at the end of the filter and wherein the filter or filter element is readily biodegradable.

Herein the phrase "wrapped paper or other non-cellulose acetate containing filtering material" refers to an individual plug of paper or other non-cellulose acetate containing filtering material around which a wrapper is engaged. The wrapper may be paper, e.g. plug wrap paper. The wrapper may be a non-porous plug wrap paper. The paper may be of basis weight from about 27 to 80 g/m². Preferably the wrapper may be non-porous plug wrap of basis weight from about 27 to 80 g/m². Preferably the ends of the wrapper are substantially flush with the ends of the plugs of paper or other non-cellulose acetate containing filtering material.

Herein the phrase "readily biodegradable" refers to the filter or filter element being able to disintegrate rapidly and completely biodegrade when immersed in water. Preferably the filter or filter element has the 'Ready Biodegradability' level of biodegradability as measured according to OECD 301B 'Ready Biodegradability' method (modified Sturm test), which is well known in the art.

The applicants have surprisingly found that a tobacco smoke filter or filter element which includes a (e.g. wrapped) paper or other non-cellulose acetate containing filtering material together with void spaces in the form of cavities and/or recesses, can provide the same (or at least similar) filtration efficiency and/or tar and nicotine retention (at a given pressure drop) as a conventional cellulose acetate filter of the same dimensions (e.g. the same length and diameter/circumference) and has the advantage of being readily biodegradable. The applicants have also found that the inclusion of cavities and/or recesses within the filter does not compromise the firmness of the paper or other non-cellulose acetate containing filtering material segment of the filter and may help to reduce the deleterious "paper taste" associated with paper tobacco smoke filters (because of a reduction in the amount of paper present in the filter). Thus providing a smoking experience that is comparable to that of a conventional cellulose acetate filtered cigarette.

In an example of the invention, one end of the (e.g. further) wrapper may extend beyond the end of the longitudinally extending (e.g. cylindrical) core around which it is engaged, to define a (e.g. tubular) cavity or recess at one end of the filter; i.e. the radially inner face of the (e.g. further) wrapper defines a (e.g. tubular) cavity or recess at one end of the filter, and the other end of the (e.g. further) wrapper is flush or substantially flush with the other end of the longitudinally extending (e.g. cylindrical) core. It will be appreciated that the (e.g. tubular) cavity or recess may be at the at the mouth or buccal end of the filter or may face or engage (connect with) either a smoking article (e.g. a cigarette, e.g. a tobacco heat product) in use. A (e.g. tubular) cavity or recess at the mouth or buccal end also provides a very distinctive end appearance which is more difficult to counterfeit.

In another example of the invention, the (e.g. further) wrapper may extend beyond the end of the longitudinally extending (e.g. cylindrical) core around which it is engaged at both ends, to define a (e.g. tubular) cavity or recess at each end of the filter, i.e. the radially inner face of the (e.g. further) wrapper defines a (e.g. tubular) cavity or recess at the end of the filter which faces and engages (connects with) the smoking article (e.g. a cigarette, e.g. a tobacco heat product) in use, and a second cavity at the other (mouth or buccal) end.

The (e.g. further) wrapper may extend beyond the end or ends of the longitudinally extending (e.g. cylindrical) core around which it is engaged by a length of 3 to 14 mm, e.g. 5 to 12 mm. Preferably the (e.g. further) wrapper extends beyond the end or ends of the longitudinally extending (e.g. cylindrical) core by a length of 4 to 12 mm, e.g. 4, 5, 6, 7, 8, 9, 10, 11 or 12 mm. Thus the (e.g. tubular) cavity or recess section of the tobacco smoke filter or filter element (that is, the length by which the or each end of the (e.g. further) wrapper extends beyond the end of the longitudinally extending (e.g. cylindrical) core (around which is engaged to define the (e.g. tubular) cavity or recess at the end of the filter) may be of length 3 to 14 mm, e.g. 5 to 12 mm e.g. 5, 6, 7, 8, 9, 10, 11 or 12 mm. The (e.g. tubular) cavity or recess effectively resembles a (e.g. paper) tube at one or both ends of the centrally located longitudinally extending (e.g. cylindrical) core.

In a further example of the invention, the (e.g. further) wrapper may be engaged around two plugs of (e.g. wrapped) paper or other non-cellulose acetate containing filtering material distanced longitudinally from each other within the longitudinally extending (e.g. cylindrical) core to define a cavity between the plugs of (e.g. wrapped) paper or other non-cellulose acetate containing filtering material. Preferably the cavity between the two plugs of (e.g. wrapped) paper or other non-cellulose acetate containing filtering material is of length 3.5 mm to 32 mm e.g. 3.5 to 25 mm, e.g. 4 to 22 mm, e.g. 5 to 21 mm, e.g. 7 to 14 mm. The cavity may vary in position within the longitudinally extending (e.g. cylindrical) core, for example the cavity may be substantially central within the longitudinally extending (e.g. cylindrical) core or positioned towards one end of the longitudinally extending (e.g. cylindrical) core. The cavity between the plugs of (e.g. wrapped) paper or other non-cellulose acetate containing filtering material is not visible at the mouth or buccal end thus in this example the tobacco smoke filter end appearance may be similar to that of a conventional paper filter thus providing the smoker with a familiar visual experience.

The tobacco smoke filter or filter element may be of length 10 to 45 mm, e.g. 11 to 35 mm, e.g. 12 to 30 mm, e.g. 15 to 30 mm, e.g. 20 to 30 mm. Preferably the tobacco smoke filter is of length 20 to 30 mm. The tobacco smoke filter or filter element may be of circumference 14 to 28 mm, e.g. 16 to 25 mm, e.g. 24 to 25 mm. Preferably the tobacco smoke filter is of circumference 16 to 25 mm. The longitudinally extending (e.g. cylindrical) core may be of length 7 to 30 mm, e.g. 10 to 30 mm e.g. 14 to 27 mm, e.g. 17 to 25 mm. The tobacco smoke filter or filter element may be used in smoking articles (e.g. a cigarette, e.g. a tobacco heat product) in a variety of different circumferences (e.g. microslim e.g. superslim, e.g. slim, e.g. standard, e.g. king size).

The (e.g. further) wrapper may be paper, e.g. plug wrap paper, e.g. stiff plug wrap paper. The (e.g. further) wrapper may be porous or non-porous. The (e.g. further) wrapper may be air-permeable plug wrap (e.g. pre-perforated plug wrap and/or laser perforated). The (e.g. further) wrapper may be a paper of basis weight from about 27 to about 120 g/m². The (e.g. further) wrapper may be of basis weight from about 78 to about 120 g/m², e.g. a basis weight of around 100 g/m², e.g. for use with a filter of standard circumference (e.g. 24 to 25 mm). The (e.g. further) wrapper may be a plug wrap paper of a lower basis weight, e.g. around 27 to 50 g/m², e.g. for use with a narrower smoking articles, e.g. a circumference less than 23 mm (e.g. down to around 16 to 17 mm circumference). The (e.g. further) wrapper may be a stiff (e.g. cylindrical) paper tube. It will be appreciated that a filter construction using a paper of the basis weight defined above for the (e.g. further) wrapper or a stiff (e.g. cylindrical) paper tube is sufficiently rigid to provide additional structural support to a cavity and/or recess and will enable the final cigarette to be manufactured and used without crushing the cavity and/or exposed paper of the (e.g. tubular) cavity or recess at the end of the filter.

The tobacco smoke filter or filter element may further comprise an outer wrapper, e.g. a tipping paper, e.g. stiff tipping paper. The outer wrapper may, together with the (e.g. further) wrapper, "double wrap" the longitudinally extending (e.g. cylindrical) core or part of the longitudinally extending (e.g. cylindrical) core (e.g. at the end of the longitudinally extending (e.g. cylindrical) core, e.g. the "tip" of the filter or filter element e.g. the end of the filter or filter element that may face or engage (connect with) either a smoking article (e.g. a cigarette, e.g. a tobacco heat product) in use).

The outer wrapper may extend beyond the longitudinally extending (e.g. cylindrical) core at one or both ends. Where the outer wrapper extends beyond the longitudinally extending (e.g. cylindrical) core at one end, the other end of the outer wrapper may be substantially flush with the end of the longitudinally extending (e.g. cylindrical) core. In an example where the tobacco smoke filter or filter element is used in a smoking article (e.g. a cigarette, e.g. a tobacco heat product) the outer wrapper may be used to join the filter to a wrapped tobacco rod by ring tipping (i.e. the outer wrapper (e.g. tipping paper) engages around just the adjacent ends of the wrapped filter and the tobacco rod to leave much of the filter wrap exposed). Alternatively, the filter may be joined to a tobacco rod by a full tipping overwrap (i.e. the outer wrapper (e.g. tipping paper) engages around the full wrapped filter length and the adjacent end of the tobacco rod).

The outer wrapper e.g. a tipping paper, e.g. stiff tipping paper, may be printed or coated (e.g. on its radially outer surface) with pattern, e.g. a cork effect on its outer surface. The pattern may resemble the filter tip of a machine made cigarette. The outer wrapper may be hydrophobic, e.g. on its outer surface, e.g. has a hydrophobic coating. The hydrophobic outer wrapper should prevent (or reduce incidence of) the smokers' lips from sticking to the filter (tip).

The (e.g. further) wrapper may be fixed around the plug or plugs of (e.g. wrapped) paper or other non-cellulose acetate containing filtering material with adhesive. The adhesive may be applied in a line along the longitudinal edge of the (e.g. further) wrapper (e.g. a lap line). The (e.g. further) wrapper may then be engaged (e.g. wrapped) around the plug or plugs of (e.g. wrapped) paper or other non-cellulose acetate containing filtering material and the opposing longitudinal edge of the (e.g. further) wrapper (e.g. the edge to which adhesive has not been applied) may be lain upon the edge of the (e.g. further) wrapper with a line of adhesive so as to sufficiently overlap with the line of adhesive, adhering the longitudinal edges of the (e.g. further) wrapper together around the plug or plugs of (e.g. wrapped) paper or other non-cellulose acetate containing filtering material. The plug or plugs of (e.g. wrapped) paper or other non-cellulose acetate containing filtering material may be fixed to the (e.g. further) wrapper through the use of anchor lines or circular spray along the length of the (e.g. further) wrapper between the longitudinal edge (e.g. lap line) and the latitudinal edges (e.g. outer edges).

The paper or other non-cellulose acetate containing filtering material is preferably a biodegradable material. The paper or other non-cellulose acetate containing filtering material is preferably readily biodegradable. The paper or other non-cellulose acetate containing filtering material may be comprised of any paper (in any form) which is conventionally used in filters or filter elements. The paper may be, for example, filtering paper, aperture paper, crepe paper, air-laid paper or machine glazed paper etc. of varying grades. The fibre of the paper or other non-cellulose acetate containing filtering material may be a natural fibre (e.g. flax, hemp, sisal, jute, abaca, cotton, coconut fibres, bamboo fibres, starch (e.g. from corn), or tobacco) or any roll material. The paper may be woven or non-woven, or in the form of a coherent web of paper, or a longitudinally corrugated and/or fibrillated web of paper e.g. gathered laterally into, and held, in plug form. The paper or other non-cellulose acetate containing filtering material may be in the form of a coherent web comprising a first paper or non-cellulose acetate containing filtering material and a second paper or non-cellulose acetate containing filtering material. The paper or non-cellulose acetate containing filtering material such as may be in the form of a blend of different paper materials or non-cellulose acetate containing filtering materials. The paper filtering material may have the same or a similar structure to those papers sold under the trademark Myria^{®} or Puracel^{®} (of Essentra plc). Where there are two or more plugs of (e.g. wrapped) paper or other non-cellulose acetate containing filtering material, the filtering material of each plug may be comprised of different filtering materials (for example a first plug may include a first paper or other non-cellulose acetate containing filtering material and a second plug may comprise a second, different paper or other non-cellulose acetate containing filtering material).

As defined above, the plug or plugs of paper or other non-cellulose acetate containing filtering material may be wrapped in paper (e.g. a wrapped paper or other non-cellulose acetate containing filtering material). The wrapper may be paper, e.g. plug wrap paper. The plug wrap paper may be non-porous. The plug wrap paper may be of basis weight from about 27 to 80 g/m². Preferably the wrapper may be non-porous plug wrap of basis weight from about 27 to 80 g/m². Preferably the ends of the wrapper are substantially flush with the ends of the plug of paper or other non-cellulose acetate containing filtering material.

The tobacco smoke filter or filter element may comprise one or more further plugs of filtering material. Preferably the filtering material is paper or non-cellulose acetate containing filtering material (in any form) as described above. The paper or non-cellulose acetate containing filtering material of each further plug may be comprised of the same or different filtering material to the paper or non-cellulose acetate containing filtering material of the other plugs of paper or non-cellulose acetate containing filtering material. The further plugs of filtering material may also be wrapped in a paper, as described above.

In a further example of the invention, there is provided a tobacco smoke filter or filter element comprising: a longitudinally extending (e.g. cylindrical) core which includes two or more (e.g. three) plugs of (e.g. wrapped) paper or non-cellulose acetate containing filtering material distanced longitudinally from each other and a (e.g. further) wrapper engaged around the plugs of (e.g. wrapped) paper or non-cellulose acetate containing filtering material, such that the (e.g. further) wrapper defines a cavity between each plug of (e.g. wrapped) paper or non-cellulose acetate containing filtering material and wherein the filter or filter element is readily biodegradable. In this example, it will be appreciated that the longitudinally extending (e.g. cylindrical) core includes two cavities between each of the three plugs of (e.g. wrapped) paper or non-cellulose acetate containing filtering material. It will be appreciated that one or more or all of the cavities may contain a capsule or capsules (e.g. a frangible capsule) which may contain an additive (e.g. a flavourant).

The tobacco smoke filter or filter element may comprise a capsule or capsules (e.g. a frangible capsule) as is well known in the art. In an example of the invention comprising a cavity or cavities between plugs of (e.g. wrapped) paper or other non-cellulose acetate containing filtering material, the capsule or capsules (e.g. a frangible capsule) may be contained within the cavity or cavities. It will be appreciated that a cavity may contain multiple capsules, and where there is more than one cavity, each individual cavity may contain a capsule or capsules. The capsule or capsules may also be embedded in the paper or other non-cellulose acetate containing filtering material. The capsule or capsules (e.g. frangible capsule) may be substantially cylindrical, of maximum diameter 2 to 5 mm, e.g. 2.5 to 4 mm, e.g. 2.5 to 3.9 mm, e.g. 3.0 to 3.8 mm, e.g. 3.2 to 3.7 mm, e.g. 3.35 or 3.5 mm.

The tobacco smoke filter or filter element may comprise a smoke modifying agent which may modify or enhance the smoking experience. The smoke modifying agent may impart an additional taste or aroma to the smoke passing through the filter or may be supresses certain flavours or aromas. The smoke modifying agent may be a liquid additive e.g. a flavour enhancing additive. The flavour enhancing additive may be any known in the art, for example an additive which reduces the "paper taste" (e.g. menthol, peppermint and/or a blend of different flavour enhancing additives).

The flavour enhancing additive may be located on or in the tobacco smoke filter or filter element (e.g. located on or impregnated in the paper or other non-cellulose acetate containing filtering material and/or the (e.g. further) wrapper, and/or in the second or further filtering material, if present, and/or in the capsule or capsules (e.g. frangible capsule), if present). If more than one flavour enhancing additive is present, the additives may be present in the same location (e.g. both/all in the paper or other non-cellulose acetate containing filtering material or on the (e.g. further) wrapper) or in different locations (e.g. one flavor enhancing additive in the paper or other non-cellulose acetate containing filtering material and/or one on the (e.g. further) wrapper and/or one in the second or further filtering material, if present etc. and/or one in the capsule or capsules (e.g. frangible capsule), if present). If more than one flavour enhancing additive is present in liquid form, the additives may be mixed together before being applied to a filter as a mix in any or all of the locations mentioned above. The inclusion of a flavour enhancing additive or additives may overcome the "paper taste" sensation and provide a cigarette with sensory characteristics similar to those from cellulose acetate filtered cigarettes.

The tobacco smoke filter or filter element may further comprise a further additive which selectively reduces one or more phenolic compounds found in the volatile and/or semi-volatile phases of cigarette smoke (e.g. polyethylene glycols for example PEG200, PEG300 and PEG400 and methoxy-polyethylene glycols for example mPEG 350). Herein, the term "further additive which selectively reduces one or more phenolic compounds found in the volatile and/or semi-volatile phases of cigarette smoke" means an additive which proportionally reduces the yield of one or more phenolic compounds (for example, proportionally reduces one or more of phenol, cresol, catechol or resorcinol) in cigarette smoke to a greater extent than the majority of compounds in smoke (e.g. tar). The tobacco smoke filter or filter element may include more than one further additive which selectively reduces one or more phenolic compounds found in the volatile and/or semi-volatile phases of cigarette smoke.

The further additive which selectively reduces one or more phenolic compounds may be located on or in the tobacco smoke filter or filter element (e.g. located on or impregnated in the paper or other non-cellulose acetate containing filtering material and/or the (e.g. further) wrapper, and/or in the second or further filtering material, if present). If more than one further additive is present, the additives may be present in the same location (e.g. both/all in the paper or other non-cellulose acetate containing filtering material or on the (e.g. further) wrapper) or in different locations (e.g. one flavor enhancing additive in the paper or other non-cellulose acetate containing filtering material and/or one on the (e.g. further) wrapper and/or one in the second or further filtering material, if present etc.). If more than one further additive is present in liquid form, the additives may be mixed together before being applied to a filter as a mix in any or all of the locations mentioned above. The inclusion of a further additive or additives may provide a cigarette filter which has a retention of phenolic compounds which is comparable to that from a conventional cellulose acetate filtered cigarette.

The invention includes a smoking article (e.g. cigarette, e.g. tobacco heat product) comprising a tobacco smoke filter or filter element according to the invention. The tobacco smoke filter or filter element of the present invention is suitable for use with all varieties of tobacco blends. In a smoking article according to the invention, a tobacco smoke filter of the invention (or a filter which includes a filter element of the invention) is joined to a wrapped tobacco rod with one end of the filter towards the tobacco. Preferably the tobacco smoke filter of the invention (or a filter which includes a filter element of the invention) is joined to a wrapped tobacco rod at the end where the (e.g. further) wrapper is substantially flush with the end of the longitudinally extending (e.g. cylindrical) core. The filter may be joined to the wrapped tobacco rod by ring tipping (i.e. an outer wrapper (e.g. tipping paper) engages around just the adjacent ends of the wrapped filter and the tobacco rod to leave much of the filter wrap exposed). The filter may be joined to the wrapped tobacco rod by a full tipping overwrap (i.e. an outer wrapper (e.g. tipping paper) engages around the full wrapped filter length and the adjacent end of the tobacco rod).

Any cigarette comprising a filter according to the invention may be unventilated, or may be ventilated to allow the ingress of air to dilute the concentration of smoke by methods well known in the art, e.g. by use of a porous (e.g. further) wrapper (e.g. a pre-perforated or laser perforated air-permeable plug wrap) and laser perforation of the outer wrapper (e.g. tipping overwrap). The final filter cigarette may be of any circumference range traditionally used in smoking products (e.g. circumference 14 to 28 mm).

The invention includes a multiple rod comprising a plurality (e.g. 2, 4, 6 etc.) of tobacco smoke filters or filter rods integrally joined end-to-end. The tobacco smoke filter or filter element may also be incorporated into a multi-segment filter as a single segment.

The present invention will now be discussed in further detail with reference to the attached Figures in which:
Figure 1 shows a schematic view of the tobacco smoke filter or filter element according to an embodiment of the invention;
Figure 2 shows a cross-section, not to scale, view of Figure 1 when cut along the filter's longitudinal axis;
Figure 3 shows a schematic view of a tobacco smoke filter or filter element according an embodiment of the invention;
Figure 4 shows a cross-section, not to scale, view of Figure 3 when cut along the filter's longitudinal axis.

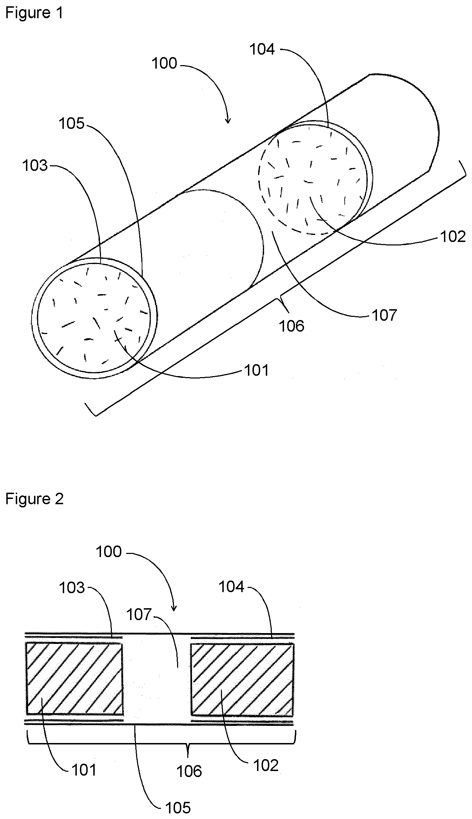

Figure 1 and 2 show a tobacco smoke filter or filter element 100 according to an embodiment of the invention. The tobacco smoke filter 100 comprises a longitudinally extending cylindrical core 106 of length 27 mm and circumference 24 mm which includes two plugs 101 and 102 of Myria^{®} paper filtering material (300 36 g/m² SWM) each of length 9 mm, distanced longitudinally from each other. Engaged around each plug 101 and 102 are wrappers 103 and 104 formed of sheets of non-porous plug wrap of 27 g/m² weight. A further wrapper 105 of stiff plug wrap of 78 g/m² weight is engaged around the plugs 101 and 102 to define a cavity 107 of length 9 mm between the plugs 101 and 102. Both ends of the further wrapper 105 are flush with the end of plugs 101 and 102. The further wrapper 105 has an overlapping longitudinal edge with adhesive applied thereon which provides a lapped and stuck seam (not shown) holding the further wrapper 105 around the plugs 101 and 102 and a further adhesive in anchor lines (not shown) in register with the plugs 101 and 102 to hold the plugs in place.

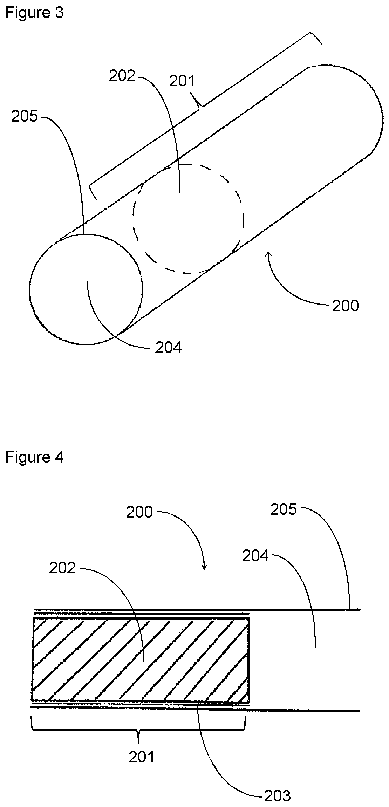

Figure 3 and 4 show a tobacco smoke filter or filter element of length 25 mm and circumference 24.5 mm according to a further embodiment of the invention. The tobacco smoke filter 200 comprises a longitudinally extending cylindrical core 201 of length 18 mm which includes a plug 202 of Puracel^{®} paper filtering material (300 mm Puracel^{®} FM26 g/m² SWM) wrapped in a non-porous plug wrap 203 (not shown in Figure 3) of 27 g/m² weight. Engaged around the longitudinally extending cylindrical core 201 is a further wrapper of stiff plug wrap 205 of 78 g/m² weight that extends beyond one end of the longitudinally extending cylindrical core 201 around which it is engaged by 7 mm, to define a tubular recess 204 of length 7 mm at that end of the filter. The other end of the further wrapper 205 is flush with the end of plug 202.

It will be appreciated that the tobacco smoke filters 100 and 200 may be made by methods known in the art and may be prepared as a multiple rod comprising a plurality (e.g. 2, 4, 6 etc.) of tobacco smoke filters or filter rods integrally joined end-to-end. The tobacco smoke filters 100 and 200 may be joined, at either end, to a wrapped tobacco rod to form a cigarette, by methods well known in the art.

### Example

Tobacco smoke filters A, B and C of the invention were made according to methods known in the art.

Tobacco smoke filter A comprises a longitudinally extending cylindrical core of length 25 mm and circumference 24.5 mm, which includes two plugs of Myria^{®} paper filtering material (280 mm 36 g/m² SWM) each of length 8 mm, distanced longitudinally from each other. Engaged around each plug of Myria^{®} paper filtering material is a wrapper of non-porous plug wrap of 27 g/m² weight. A further wrapper of stiff plug wrap of 78 g/m² weight is engaged around the plugs of Myria^{®} paper filtering material such that the further wrapper defines a cavity of length 9 mm between the plugs of wrapped Myria^{®} paper filtering material. The further wrapper of stiff plug wrap contains an infused flavour modifier (as described in WO2010/136751) to remove the deleterious "paper taste".

Tobacco smoke filter B comprises a longitudinally extending cylindrical core of length 25 mm and circumference 24.5 mm, which includes a plug of Puracel^{®} paper filtering material (300 mm Puracel^{®} FM26 g/m² SWM) of length 8 mm and a plug of Myria^{®} paper filtering material (280 mm 36 g/m² SWM) of length 8 mm, distanced longitudinally from each other. Engaged around the plug of Puracel^{®} paper filtering material and the plug of Myria^{®} paper filtering material are wrappers of non-porous plug wrap of 27 g/m² weight. A further wrapper of stiff plug wrap of 78 g/m² weight is engaged around the plugs of wrapped Puracel^{®} and wrapped Myria^{®} paper filtering material such that the further wrapper defines a cavity of length 9 mm between the plugs of wrapped Puracel^{®} and wrapped Myria^{®} paper filtering material.

Tobacco smoke filter C comprises a longitudinally extending cylindrical core of length 25 mm and circumference 24.5 mm, which includes a plug of Puracel^{®} paper filtering material (300 mm Puracel^{®} FM26 g/m² SWM) of length 18 mm, wrapped in non-porous 27 g/m² plug wrap.

A further wrapper of stiff plug wrap of 78 g/m² is engaged around the longitudinally extending cylindrical core and extends beyond one end of the longitudinally extending cylindrical core to define a tubular recess of length 7 mm at the end of the filter. The other end of the further wrapper of stiff plug wrap of 78 g/m² weight is flush with the other end of the longitudinally extending cylindrical core.

The filtration efficiency (at a pressure drop of 100 mmWG) and firmness (of the paper or other non-cellulose acetate containing filtering material segment) of tobacco smoke filter A, tobacco smoke filter B and tobacco smoke filter C were estimated and compared to the filtration efficiency (at a pressure drop of 100 mmWG) and firmness of tobacco smoke filter D, a conventional 27 mm mono acetate tobacco smoke filter wrapped in a non-porous plug wrap of weight 27 g/m², length 25 mm and circumference 24.5 mm. The results are illustrated in Table 1.

To measure the filtration efficiency and firmness of tobacco smoke filter D, the filter was joined to a wrapped tobacco rod to form a cigarette by methods known in the art. The average firmness and tar retention were measured by methods well known in the art (for filtration efficiency ISO 3308:2012 specifies Routine analytical cigarette-smoking machine - Definitions and standard conditions).

**Table 1**

| | **Tar Retention %*** | **Firmness %**** |
|---|---|---|
| Filter A | 62.0 | 90 |
| Filter B | 56.0 | 90 |
| Filter C | 59.5 | 90 |
| Filter D | 59.0 | 89 |

| | | |
|---|---|---|
| *Estimated for filter A, filter B and filter C ** Estimated for filter A, filter B and filter C | | |

The applicants have surprisingly found that a tobacco smoke filter or filter element which includes a paper or other non-cellulose acetate containing filtering material together with void spaces in the form of cavities and/or recesses, can provide the same (or at least similar) firmness, filtration efficiency and/or tar and nicotine retention (at a given pressure drop) as a conventional cellulose acetate filter of the same dimensions (e.g. the same length and diameter/circumference) and has the advantage of being readily biodegradable. In particular, the use of Puracel^{®} paper filtering material may even reduce the retention of tar and nicotine, compared to a conventional cellulose acetate filter.

Further, the void spaces in the form of cavities and/or recesses and the use of an infused flavour modifier within the paper filter can achieve a similar tar and nicotine retention compared to a conventional cellulose acetate filter and improves the "paper taste" associated with typical paper filters. Thus the applicants have found that the inclusion of cavities and/or recesses within a filter comprising paper or other non-cellulose acetate containing filtering material provide a smoking experience that is comparable to that from a conventional cellulose acetate filtered cigarette.

## Claims

1. A tobacco smoke filter or filter element (100, 200) comprising: a longitudinally extending core (106, 201) which includes a paper or other non-cellulose acetate containing filtering material and a wrapper engaged around the longitudinally extending core, wherein the filter or filter element is readily biodegradable and has 'Ready Biodegradability' level of biodegradability as measured according to OECD 301B 'Ready Biodegradability' method (modified Sturm test) and wherein;
(a) the longitudinally extending core includes two plugs (101, 102) of paper or other non-cellulose acetate containing filtering material distanced longitudinally from each other and the wrapper (105) engaged around the plugs of paper or other non-cellulose acetate containing filtering material defines a cavity between the plugs of paper or other non-cellulose acetate containing filtering material; and/or
(b) at least one end of the wrapper extends beyond the end of the longitudinally extending core (201) around which it is engaged to define a cavity or recess at the end of the filter.

2. A tobacco smoke filter or filter element (100, 200) according to claim 1 wherein the wrapper extends beyond the end of the core around which it is engaged by a length of 3 to 14 mm, e.g. 5 to 12 mm, e.g. 4, 5, 6, 7, 8, 9, 10, 11 or 12 mm.

3. A tobacco smoke filter or filter element (100, 200) according to any preceding claim wherein both ends of the wrapper extend beyond the end of the core around which it is engaged to define a cavity or recess at each end of the filter.

4. A tobacco smoke filter or filter element (100, 200) according to claim 3 wherein both ends of the wrapper extend beyond the end of the core around which it is engaged by a length of 3 to 14 mm, e.g. 5 to 12 mm, e.g. 4, 5, 6, 7, 8, 9, 10, 11 or 12 mm.

5. A tobacco smoke filter or filter element (200) according to claim 2 wherein one end of the wrapper extends beyond the end of the core around which it is engaged, to define a cavity or recess at the end of the filter; and the other is flush or substantially flush with the other end of the core.

6. A tobacco smoke filter or filter element (100, 200) according to any preceding claim wherein the cavity between the plugs of wrapped paper or other non-cellulose acetate containing filtering material is of length 3.5 mm to 32 mm e.g. 3.5 to 25 mm, e.g. 4 to 22 mm, e.g. 5 to 21 mm, e.g. 7 to 14 mm.

7. A tobacco smoke filter or filter element (100, 200) according to any preceding claim which is of length 10 to 45 mm, e.g. 11 to 35 mm, e.g. 12 to 30 mm, e.g. 15 to 30 mm, e.g. 20 to 30 mm and/or of perimeter or circumference 14 to 28 mm, e.g. 16 to 25 mm, e.g. 24 to 25 mm and/or the longitudinally extending core is of length 7 to 30 mm, e.g. 10 to 30 mm e.g. 14 to 27 mm, e.g. 17 to 25 mm.

8. A tobacco smoke filter or filter element (100, 200) according to any preceding claim wherein the wrapper is paper of basis weight from about 27 to about 120 g/m², e.g. a basis weight of about 50 to 100 g/m² and/or the tobacco smoke filter or filter element comprises an outer wrapper, e.g. a tipping wrapper.

9. A tobacco smoke filter or filter element (100, 200) according to any preceding claim wherein the paper or other non-cellulose acetate containing filtering material is paper e.g. filtering paper, aperture paper or crepe paper, air-laid paper or machine glazed paper and/or the paper or other non-cellulose acetate containing filtering material is a natural fibre e.g. flax, hemp, sisal, jute, abaca, cotton, coconut fibres, bamboo fibres, starch e.g. from corn, or tobacco.

10. A tobacco smoke filter or filter element (100, 200) according to any proceeding claim wherein the paper or other non-cellulose acetate containing filtering material comprises a blend of different paper or other non-cellulose acetate containing filtering materials e.g. a blend of paper and/or the plugs of paper filtering material are comprised of different paper filtering materials.

11. A tobacco smoke filter or filter element (100, 200) according to any preceding claim which comprises one or more further plugs of filtering material, e.g. a paper or other non-cellulose acetate containing filtering material and/or which further comprises a capsule or capsules e.g. a frangible capsule.

12. A tobacco smoke filter or filter element (100, 200) according to any preceding claim which further comprises an additive e.g. a liquid additive, e.g. a flavour additive, e.g. an additive which selectively reduces one or more phenolic compounds found in the volatile and/or semi-volatile phases of cigarette smoke.

13. A tobacco smoke filter or filter element (100, 200) according to claim 12 wherein the additive e.g. a liquid additive, e.g. a flavour additive, e.g. an additive which selectively reduces one or more phenolic compounds found in the volatile and/or semi-volatile phases of cigarette smoke is infused in the paper or other non-cellulose acetate containing filtering material or contained within the capsule or cavities.

14. A smoking article e.g. a cigarette, e.g. a tobacco heat product comprising a tobacco smoke filter according to any preceding claim, or a tobacco smoke filter including a filter element (100, 200) according to any preceding claim, joined to a wrapped tobacco rod with one end of the filter facing towards the tobacco rod.

15. A multiple rod comprising a plurality e.g. 2, 4, 6 etc. of tobacco smoke filters or filter elements (100, 200) according to any preceding claim integrally joined end-to-end.

## Patentansprüche

1. Tabakrauchfilter oder -filterelement (100, 200), umfassend: einen sich längs erstreckenden Kern (106, 201), der ein papier- oder anderes nicht celluloseacetathaltiges Filtermaterial und eine Umhüllung, die um den sich längs erstreckenden Kern angelegt ist, aufweist, wobei der Filter oder das Filterelement biologisch leicht abbaubar ist und den Grad "Leichte biologische Abbaubarkeit" der biologischen Abbaubarkeit, gemessen gemäß OECD-Verfahren 301B "Leichte biologische Abbaubarkeit" (modifizierter Sturm-Test), aufweist und wobei:
a) der sich längs erstreckende Kern zwei Einsätze (101, 102) aus papier- oder anderem nicht celluloseacetathaltigen Filtermaterial aufweist, die in Längsrichtung voneinander beabstandet sind, und die Umhüllung (105), die um die Einsätze aus papier- oder anderem nicht celluloseacetathaltigen Filtermaterial angelegt ist, einen Hohlraum zwischen den Einsätzen aus papier- oder anderem nicht celluloseacetathaltigen Filtermaterial definiert; und/oder
b) sich mindestens ein Ende der Umhüllung über das Ende des sich in Längsrichtung erstreckenden Kerns (201) hinaus erstreckt, um den sie angelegt ist, um einen Hohlraum oder eine Aussparung am Ende des Filters zu definieren.

2. Tabakrauchfilter oder -filterelement (100, 200) nach Anspruch 1, wobei die Umhüllung sich um eine Länge von 3 mm bis 14 mm, z. B. 5 mm bis 12 mm, z. B. 4, 5, 6, 7, 8, 9, 10, 11 oder 12 mm, über das Ende des Kerns, um den sie angelegt ist, hinaus erstreckt.

3. Tabakrauchfilter oder -filterelement (100, 200) nach einem der vorhergehenden Ansprüche, wobei beide Enden der Umhüllung sich über das Ende des Kerns, um den sie angelegt ist, hinaus erstrecken, um an jedem Ende des Filters einen Hohlraum oder eine Aussparung zu definieren.

4. Tabakrauchfilter oder -filterelement (100, 200) nach Anspruch 3, wobei beide Enden der Umhüllung sich um eine Länge von 3 mm bis 14 mm, z. B. 5 mm bis 12 mm, z. B. 4, 5, 6, 7, 8, 9, 10, 11 oder 12 mm, über das Ende des Kerns, um den sie angelegt ist, hinaus erstrecken.

5. Tabakrauchfilter oder -filterelement (200) nach Anspruch 2, wobei ein Ende der Umhüllung sich über das Ende des Kerns, um den sie angelegt ist, hinaus erstreckt, um am Ende des Filters einen Hohlraum oder eine Aussparung zu definieren; und das andere mit dem anderen Ende des Kerns bündig oder im Wesentlichen bündig ist.

6. Tabakrauchfilter oder -filterelement (100, 200) nach einem der vorhergehenden Ansprüche, wobei der Hohlraum zwischen den Einsätzen aus umhülltem papier- oder anderem nicht celluloseacetathaltigen Filtermaterial eine Länge von 3,5 mm bis 32 mm, z. B. 3,5 bis 25 mm, z. B. 4 bis 22 mm, z. B. 5 bis 21 mm, z. B. 7 bis 14 mm hat.

7. Tabakrauchfilter oder -filterelement (100, 200) nach einem der vorhergehenden Ansprüche, der bzw. das eine Länge von 10 bis 45 mm, z. B. 11 bis 35 mm, z. B. 12 bis 30 mm, z. B. 15 bis 30 mm, z. B. 20 bis 30 mm und/oder einen Perimeter oder Umfang von 14 bis 28 mm, z. B. 16 bis 25 mm, z. B. 24 bis 25 mm hat und/oder wobei der sich längs erstreckende Kern eine Länge von 7 bis 30 mm, z. B. 10 bis 30 mm, z. B. 14 bis 27 mm, z. B. 17 bis 25 mm hat.

8. Tabakrauchfilter oder -filterelement (100, 200) nach einem der vorhergehenden Ansprüche, wobei die Umhüllung Papier mit einem Basisgewicht von etwa 27 bis etwa 120 g/m² ist, z. B. einem Basisgewicht von etwa 50 bis 100 g/m², und/oder der bzw. das Tabakrauchfilter oder -filterelement eine äußere Umhüllung, z. B. ein Filterbelagpapier, umfasst.

9. Tabakrauchfilter oder -filterelement (100, 200) nach einem der vorhergehenden Ansprüche, wobei das papier- oder andere nicht celluloseacetathaltige Filtermaterial Papier ist, z. B. Filterpapier, Lochpapier oder gekrepptes Papier, Airlaid-Papier oder einseitig glattes Papier, und/oder das papier- oder andere nicht celluloseacetathaltige Filtermaterial Naturfaser, z. B. Flachs, Hanf, Sisal, Jute, Abacá, Baumwolle, Kokosfasern, Bambusfasern, Stärke, z. B. aus Mais, oder Tabak, ist.

10. Tabakrauchfilter oder -filterelement (100, 200) nach einem der vorhergehenden Ansprüche, wobei das papier- oder andere nicht celluloseacetathaltige Filtermaterial eine Mischung aus verschiedenen papier- oder anderen nicht celluloseacetathaltigen Filtermaterialien, z. B. eine Papiermischung, umfasst und/oder die Einsätze aus Papierfiltermaterial aus verschiedenen Papierfiltermaterialien bestehen.

11. Tabakrauchfilter oder -filterelement (100, 200) nach einem der vorhergehenden Ansprüche, der bzw. das einen oder mehrere weitere Einsätze aus Filtermaterial, z. B. einem papier- oder anderen nicht celluloseacetathaltigen Filtermaterial, umfasst und/oder der bzw. das ferner eine Kapsel oder Kapseln, z. B. eine zerbrechliche Kapsel, umfasst.

12. Tabakrauchfilter oder -filterelement (100, 200) nach einem der vorhergehenden Ansprüche, ferner umfassend einen Zusatz, z. B. einen flüssigen Zusatz, z. B. einen Geschmackstoffzusatz, z. B. einen Zusatz, der selektiv eine oder mehrere Phenolverbindungen reduziert, die in der flüchtigen und/oder halbflüchtigen Phase von Zigarettenrauch vorkommen.

13. Tabakrauchfilter oder -filterelement (100, 200) nach Anspruch 12, wobei der Zusatz, z. B. ein flüssiger Zusatz, z. B. ein Geschmackstoffzusatz, z. B. ein Zusatz, der selektiv eine oder mehrere Phenolverbindungen reduziert, die in der flüchtigen und/oder halbflüchtigen Phase von Zigarettenrauch vorkommen, in das papier- oder nicht celluloseacetathaltige Filtermaterial eingebracht oder in der Kapsel oder den Hohlräumen enthalten ist.

14. Raucherartikel, z. B. eine Zigarette, z. B. ein Tabakerhitzer, umfassend einen Tabakrauchfilter nach einem der vorhergehenden Ansprüche oder einen Tabakrauchfilter mit einem Filterelement (100, 200) nach einem der vorhergehenden Ansprüche, der mit einem Ende des Filters dem Tabakstab gegenüberliegend an einen umhüllten Tabakstab angesetzt ist.

15. Mehrfachstab, der mehrere, z. B. 2, 4, 6 usw., Tabakrauchfilter oder -filterelemente (100, 200) nach einem der vorhergehenden Ansprüche umfasst, die einstückig Ende an Ende auf Stoß aneinandergefügt sind.

## Revendications

1. Filtre ou élément filtre à fumée de tabac (100, 200) comprenant un centre (106, 201) s'étendant longitudinalement qui comprend un papier ou autre matériau filtrant contenant de l'acétate sans cellulose et une enveloppe engagée autour du centre s'étendant longitudinalement, où le filtre ou élément filtrant est facilement biodégradable et a un niveau de 'Biodégradabilité facile' de biodégradabilité tel que mesuré conformément au test de 'Biodégradabilité facile' de l'OCDE 301B (test de Sturm modifié) et dans lequel :
(a) le centre s'étendant longitudinalement comprend deux bouts-filtres (101, 102) en papier ou autre matériau filtrant contenant de l'acétate sans cellulose distancés longitudinalement l'un de l'autre et l'enveloppe (105) engagée autour des bouts-filtres en papier ou autre matériau filtrant contenant de l'acétate sans cellulose définit une cavité entre les bouts-filtres en papier ou autre matériau filtrant contenant de l'acétate sans cellulose ; et/ou
(b) au moins une extrémité de l'enveloppe s'étend au-delà de l'extrémité du centre (201) s'étendant longitudinalement autour duquel elle est engagée pour définir une cavité ou un évidement à l'extrémité du filtre.

2. Filtre ou élément filtre à fumée de tabac (100, 200) selon la revendication 1, dans lequel l'enveloppe s'étend au-delà de l'extrémité du centre autour duquel elle est engagée d'une longueur de 3 à 14 mm, par ex. de 5 à 12 mm, par ex. de 4, 5, 6, 7, 8, 9, 10, 11 ou 12 mm.

3. Filtre ou élément filtre à fumée de tabac (100, 200) selon l'une quelconque des revendications précédentes, dans lequel les deux extrémités de l'enveloppe s'étendent au-delà de l'extrémité du centre autour duquel elle est engagée pour définir une cavité ou un évidement à chaque extrémité du filtre.

4. Filtre ou élément filtre à fumée de tabac (100, 200) selon la revendication 3, dans lequel les deux extrémités de l'enveloppe s'étendent au-delà du centre autour duquel elle est engagée d'une longueur de 3 à 14 mm, par ex. de 5 à 12 mm, par ex. de 4, 5, 6, 7, 8, 9, 10, 11 ou 12 mm.

5. Filtre ou élément filtre à fumée de tabac (200) selon la revendication 2, dans lequel une extrémité de l'enveloppe s'étend au-delà de l'extrémité du centre autour duquel elle est engagée, pour définir une cavité ou un évidement à l'extrémité du filtre, et l'autre est affleurée ou sensiblement affleurée avec l'autre extrémité du centre.

6. Filtre ou élément filtre à fumée de tabac (100, 200) selon l'une quelconque des revendications précédentes, dans lequel la cavité entre les bouts-filtres enveloppés de papier ou autre matériau filtrant contenant de l'acétate sans cellulose est d'une longueur de 3,5 mm à 32 mm, par ex. de 3,5 à 25 mm, par ex. de 4 à 22 mm, par ex. de 5 à 21 mm, par ex. de 7 à 14 mm.

7. Filtre ou élément filtre à fumée de tabac (100, 200) selon l'une quelconque des revendications précédentes qui est d'une longueur de 10 à 45 mm, par ex. de 11 à 35 mm, par ex. de 12 à 30 mm, par ex. de 15 à 30 mm, par ex. de 20 à 30 mm et/ou d'un périmètre ou d'une circonférence de 14 à 28 mm, par ex. de 16 à 25 mm, par ex. de 24 à 25 mm et/ou le centre s'étendant longitudinalement est d'une longueur de 7 à 30 mm, par ex. de 10 à 30 mm, par ex. de 14 à 27 mm, par ex. de 17 à 25 mm.

8. Filtre ou élément filtre à fumée de tabac (100, 200) selon l'une quelconque des revendications précédentes, dans lequel l'enveloppe est en papier d'un poids de base d'environ 27 à environ 120 g/m², par ex. d'un poids de base d'environ 50 à environ 100 g/m² et/ou le filtre ou élément filtre à fumée de tabac comprend une enveloppe externe, par ex. une enveloppe de filtre.

9. Filtre ou élément filtre à fumée de tabac (100, 200) selon l'une quelconque des revendications précédentes, dans lequel le papier ou autre matériau filtrant contenant de l'acétate sans cellulose est du papier, par ex. du papier filtre, du papier ajouré ou du papier crêpe, du papier couché à l'air ou du papier glacé à la machine et/ou le papier ou autre matériau filtrant contenant de l'acétate sans cellulose est une fibre naturelle, par ex. lin, chanvre, sisal, jute, abaca, coton, fibres de coco, fibres de bambou, amidon par ex. de blé ou tabac.

10. Filtre ou élément filtre à fumée de tabac (100, 200) selon l'une quelconque des revendications précédentes, dans lequel le papier ou autre matériau filtrant contenant de l'acétate sans cellulose comprend un mélange de papier ou autres matériaux filtrants contenant de l'acétate sans cellulose différents par ex. un mélange de papier et/ou les bouts-filtres en matériau filtrant en papier sont composés de différents matériaux filtrants en papier.

11. Filtre ou élément filtre à fumée de tabac (100, 200) selon l'une quelconque des revendications précédentes, qui comprend un ou plusieurs bouts-filtres supplémentaires en matériau filtrant, par ex. un papier ou autre matériau filtrant contenant de l'acétate sans cellulose et/ou qui comprend en outre une capsule ou des capsules par ex. une capsule friable.

12. Filtre ou élément filtre à fumée de tabac (100, 200) selon l'une quelconque des revendications précédentes, qui comprend en outre un additif, par ex. un additif liquide, par ex. un additif aromatique, par ex. un additif qui réduit sélectivement un ou plusieurs composés phénoliques présents dans les phases volatiles et/ou semi-volatiles de fumée de cigarette.

13. Filtre ou élément filtre à fumée de tabac (100, 200) selon la revendication 12, dans lequel l'additif, par ex. un additif liquide, par ex. un additif aromatique, par ex. un additif qui réduit sélectivement un ou plusieurs composés phénoliques présents dans les phases volatiles et/ou semi-volatiles de fumée de cigarette est infusé dans le papier ou autre matériau filtrant contenant de l'acétate sans cellulose ou contenu dans la capsule ou dans les cavités.

14. Article à fumer, par ex. une cigarette, par ex. un produit à tabac chauffé comprenant un filtre à fumée de tabac selon l'une quelconque des revendications précédentes, ou un filtre à fumée de tabac comprenant un élément filtre (100, 200) selon l'une quelconque des revendications précédentes, joint à un boudin de tabac enveloppé avec une extrémité du filtre faisant face au boudin de tabac.

15. Boudin multiple comprenant une pluralité, par ex. 2, 4, 6, etc. filtres ou éléments filtres à fumée de tabac (100, 200) selon l'une quelconque des revendications précédentes joints bout à bout.
